# EUROPÄISCHE PATENTSCHRIFT

(11) **EP 2 811 639 B1**
(45) Veröffentlichungstag und Bekanntmachung des Hinweises auf die Patenterteilung: **05.09.2018**
(21) Anmeldenummer: 13170625.1
(22) Anmeldetag: 05.06.2013
(51) Int. Cl.: H02M 3/335

(54) **Durchflusswandler**
Forward converter
Convertisseur directe

(43) Veröffentlichungstag der Anmeldung: 10.12.2014
(73) Patentinhaber: Siemens Aktiengesellschaft, 80333 München (DE)
(72) Erfinder: Dyszewski, Janusz, 1200 Wien (AT); Emberger, Andreas, 1030 Wien (AT)
(74) Vertreter: Maier, Daniel Oliver

(56) Entgegenhaltungen:
- DE-A1-102005 022 559

## Beschreibung

Die Erfindung betrifft einen Durchflusswandler mit einem Transformator, umfassend eine Primärwicklung, welche mittels eines Leistungsschaltelements an eine Eingangsspannung schaltbar ist, wobei zur Flussphasenbegrenzung ein RC-Integrator an eine von der Eingangsspannung abhängige Hilfsversorgungsspannung angeschaltet ist.

Wie bei allen Schaltreglern wird auch beim Durchflusswandler eine Ausgangsspannung über die Variation eines Tastverhältnisses eingestellt. Dazu ist ein Pulsbreitenmodulator notwendig. Er arbeitet häufig mit konstanter Frequenz, also mit konstanter Periodendauer und mit variabler Einschaltzeit des Leistungsschaltelements.

Zur Generierung eines pulsweitenmodulierten Signals, kurz PWM-Signal, wird ein Sägezahnsignal mit einer Referenzspannung verglichen. Durch Veränderung der Referenzspannung wird das Tastverhältnis variiert. Eine Schaltung zum Generieren des PWM-Signals umfasst dabei häufig einen Mikrocontroller (z.B. Current-Mode PWM Controller UC3843 von Texas Instruments). Dabei wird die jeweilige Rampe des Sägezahnsignals in der Regel mittels eines RC-Integrators erzeugt.

Begrenzt wird das Tastverhältnis zunächst durch einen Oszillator des Mikrocontrollers. Dieser Oszillator stellt typischerweise eine Totzeit von 30% sicher.

Bei nicht konstanter Eingangsspannung besteht zusätzlich die Notwendigkeit, das Tastverhältnis abhängig von der Eingangsspannung zu begrenzen. Konkret geschieht eine Begrenzung der Flussphase, also jener Zeit, während der bei eingeschaltetem Leistungsschaltelement mittels Transformator Energie von einer Primärseite auf eine Sekundärseite des Wandlers übertragen wird. Diese Flussphasenbegrenzung erfolgt durch die Anschaltung des RC-Integrator an eine Hilfsversorgungsspannung, welche von der Eingangsspannung abhängig ist. Bei höheren Eingangsspannungen erhöht sich auch die Hilfsversorgungsspannung. Die vom RC-Integrator erzeugte jeweilige Rampe wird steiler und das maximal mögliche Tastverhältnis reduziert sich. Dadurch ist sichergestellt, dass bei hohen Eingangsspannungen während einer Sperrphase genügend Spannungszeitfläche für die Entmagnetisierung des Transformators verbleibt.

Dabei ist der nichtlineare Verlauf der mittels RC-Integrator erzeugten Sägezahnrampe zu beachten. Die Dimensionierung des RC-Integrator erfolgt in der Weise, dass im gesamten Eingangsspannungsbereich keine zu lange Flussphase auftritt. Ansonsten wäre bei gleichbleibender Taktfrequenz die verbleibende Entmagnetisierungsphase zu kurz und der Transformator würde in eine magnetische Sättigung geraten. Diese Gefahr besteht insbesondere bei hoher Eingangsspannung und ausgangsseitiger Unterspannung. Bei der Entwicklung eines Durchflusswandlers erfordern diese Schwierigkeiten ein besonderes Augenmerk bei der Dimensionierung der Schaltungselemente.

Aus der DE 10 2005 022 559 A1 ist ein Durchflusswandler bekannt, bei dem eine mittels RC-Integrator erzeugte Spannungsrampe durch eine Serienschaltung aus einer Zenerdiode und einem Widerstand annähernd linearisiert wird.

Der Erfindung liegt die Aufgabe zugrunde, für einen Durchflusswandler der eingangs genannten Art eine Verbesserung gegenüber dem Stand der Technik anzugeben. Erfindungsgemäß wird diese Aufgabe gelöst durch die Merkmale des Anspruchs 1. Bevorzugte Ausführungsformen finden sich in abhängigen Ansprüchen.

Dabei ist zwischen RC-Integrator und Hilfsversorgungsspannung ein nichtlinearer Spannungsteiler angeordnet, welcher eine nichtlineare Spannungsrampe des RC-Integrators einem linearen Verlauf annähert. Mit dieser Schaltungsergänzung erzeugt der RC-Integrator eine nahezu lineare Sägezahnrampe. Durch Reduzierung oder Erhöhung der Integratorspannung wird die Einschaltdauer des Leistungsschaltelements verlängert oder verkürzt. Damit erfolgt bei variabler Eingangsspannung eine genau justierbare Flussphasenbegrenzung. Die Arbeitsweise des Durchflusswandlers bleibt auch bei geänderter Eingangsspannung stabil.

Eine Verbesserung sieht vor, dass die Hilfsversorgungsspannung an einem ersten Kondensator anliegt, welcher über eine erste Diode an eine Hilfswicklung des Transformators angeschlossen ist. Damit ist auf einfache Weise eine Abhängigkeit zwischen Hilfsversorgungsspannung und Eingangsspannung gegeben.

Erfindungsgemäß ist zudem vorgesehen, dass der Spannungsteiler zwei ein Serie an die Hilfsversorgungsspannung angeschlossene Hauptwiderstände umfasst und wenn parallel zu jedem Hauptwiderstand eine Serienschaltung aus einem Zusatzwiderstand und einer Zenerdiode angeordnet ist. Die Liniearisierung der Spannungsrampe des RC-Integrators geschieht dabei durch geeignete Dimensionierung der einzelnen Schaltungselemente.

Günstigerweise ist der RC-Integrator parallel zu einem Hauptwiderstand angeordnet, sodass am Eingang des RC-Integrators die geteilte Hilfsversorgungsspannung anliegt.

In einer Weiterbildung ist eine Verbindung zwischen dem Integrator-Widerstand und dem Integrator-Kondensator des RC-Integrators einerseits über eine zweite Diode an eine Resetschaltung angeschaltet und andererseits mit einer Referenzschaltung verbunden. Mittels dieser Schaltungselemente ist die zyklische Abfolge mehrerer Spannungsrampen auf einfache Weise realisierbar.

Dabei ist es günstig, wenn die Resetschaltung einen PWM-Ausgang eines Mikrocontrollers umfasst. Mittels Mikrocontrollers ist die Steuerung des Durchflusswandlers auf einfache Weise an unterschiedliche Anforderungen anpassbar.

Des Weiteren ist es günstig, wenn die Referenzschaltung zum Vergleich der am Integrator-Kondensator anliegenden Integratorspannung mit einer Referenzspannung ein Hilfsschaltelement umfasst. Damit ist ein einfacher Aufbau der Steuerschaltung gegeben.

Die Erfindung wird nachfolgend in beispielhafter Weise unter Bezugnahme auf die beigefügten Figuren erläutert. Es zeigen in schematischer Darstellung:
- Fig. 1: Schaltungsaufbau nach dem Stand der Technik
- Fig. 2: Schaltungsaufbau mit linearisierter Spannungsrampe des RC-Integrators

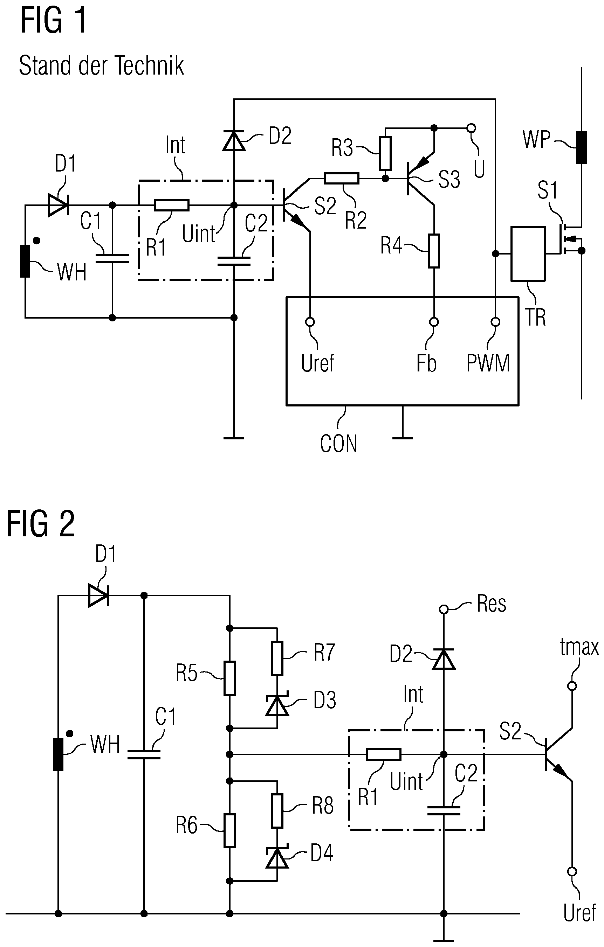

Die in Fig. 1 dargestellte Steuerschaltung eines Durchflusswandlers umfasst einen RC-Integrator Int, welcher über einen ersten Kondensator C1 und eine erste Diode D1 an eine Hilfswicklung WH eines Transformators angeschaltet ist. Konkret ist die Kathode des ersten Diode D1 über einen Integrator-Widerstand R1 des RC-Integrators Int mit einer Seite eines Integrator-Kondensators C2 des RC-Integrators Int verbunden. Die andere Seite dieses Integrator-Kondensators C2 liegt an einem Bezugspotenzial an.

Des Weiteren ist die erste Seite des Integrator-Kondensators C2 über eine zweite Diode D2 an einen PWM-Ausgang PWM eines Mikrocontrollers CON angeschaltet. Auf diese Weise ist eine einfache Resetschaltung realisiert. Das Signal am PWM-Ausgang PWM schaltet dabei über einen Treiber TR ein Leistungsschaltelement S1, mittels dessen eine primäre Hauptwicklung WP des Transformators taktend an eine Eingangsspannung angeschaltet ist.

Zum Vergleich mit einer Referenzspannung ist die erste Seite des Integrator-Kondensators C2 zudem mit einer Referenzschaltung verbunden. Die Referenzschaltung umfasst beispielsweise ein erstes Hilfsschaltelement S2. Im Falle eines NPN-Transistors ist dabei die Basis mit der ersten Seite des Integrator-Kondensators C2 verbunden. Der Emitter liegt an einer Referenzspannung Uref des Mikrocontrollers CON an und der Kollektor ist über einen zweiten Widerstand R2 mit einem weiteren Teil der Referenzschaltung zur Vorgabe einer maximalen Einschaltzeit tmax des Leistungsschaltelements S1 verbunden. Im gezeigten Beispiel ist ein zweitens Hilfsschaltelement S3 als PNP-Transistor ausgebildet und dessen Basis ist über den zweiten Widerstand R2 mit dem Kollektor des zweiten Schaltelements S2 verbunden. Zudem sind die Basis des zweiten Hilfsschaltelements S3 über einen dritten Widerstand R3 und der Emitter des zweiten Hilfsschaltelements S3 an eine Versorgungsspannung U angeschaltet. Der Kollektor des zweiten Hilfsschaltelements S3 ist über einen vierten Widerstand R4 an einen Feedback-Anschluss Fb des Mikrocontrollers CON angeschlossen.

Ein Schaltzyklus beginnt mit dem Einschalten des Leistungsschaltelements S1. Mit diesem Beginn der Flussphase gibt die sperrende zweite Diode D2 den als Oszillator wirkenden RC-Integrator Int frei. Die am Integrator-Kondensator C2 anliegende Spannung steigt an entsprechend der Zeitkonstante, die sich aus der Dimensionierung des Integrator-Widerstands R1 und des Integrator-Kondensators C2 ergibt. Der Spannungsanstieg ist dabei abhängig von der Hilfsversorgungsspannung, welche über die Transformatorübersetzung proportional zur Eingangsspannung ist.

Beim Erreichen der Referenzspannung Uref wird das erste Hilfsschaltelement S2 leitend und infolgedessen endet die Flussphase mit dem Ausschalten des Leistungsschaltelements S1.

Fig. 2 zeigt die ergänzenden Elemente R5, R6, R7, R8, D3, D4 des nichtlinearen Spannungsteilers. Durch geeignete Dimensionierung dieser Elemente R5, R6, R7, R8, D3, D4 wird die Integratorspannung Uint reduziert oder erhöht. Eine Reduzierung der Integratorspannung Uint führt zu einer verlängerten Einschaltdauer des Leistungsschaltelements, weil die Referenzspannung Uref später erreicht wird. In entsprechender Weise führt eine Erhöhung der Integratorspannung Uint zu einer verkürzten Einschaltdauer des Leistungsschaltelements S1.

Der Spannungsteiler liegt über den ersten Kondensator C1 und die ersten Diode D1 an der Hilfswicklung WH an. In der beispielhaften Ausführung umfasst der Spannungsteiler zwei in Serie geschaltete Hauptwiderstände R5, R6, wobei an der Verbindung zwischen diesen Hauptwiderständen R5, R6 der RC-Integrator Int anliegt. Parallel zu jedem Hauptwiderstand R5 bzw. R6 ist jeweils eine Serienschaltung aus einem Zusatzwiderstand R7 bzw. R8 und einer Zenerdiode D3 bzw. D4 angeordnet. Damit ist ein nichtlinearer Spannungsteiler realisiert, welcher die nichtlineare Rampe des RC-Integrators Int korrigiert und somit linearisiert.

Konkret wird bei Erreichen einer Zenderdiodenspannung der aus den Hauptwiderständen R5, R6 gebildete Spannungsteiler mittels der parallelen Zusatzwiderstände R7, R8 kompensiert. Dabei fällt am ersten Hauptwiderstand R5 und bei überschrittener Zenerdiodenspannung am ersten Zusatzwiderstand R7 die Differenz zwischen Hilfsversorgungsspannung und der Teilspannung am Eingang des RC-Integrators Int ab. Am zweiten Hauptwiderstand R6 und bei überschrittener Zenerdiodenspannung am zweiten Zusatzwiderstand R8 fällt die Teilspannung gegen ein Bezugspotenzial ab.
Das Finden einer richtigen Dimensionierung der Schaltungselemente R5, R6, R7, R8, D3, D4 ist mittels einfacher Tests oder Simulationen durchführbar. Die Widerstände R5, R6, R7, R8, und die Zenerdioden D3, D4 sind so zu dimensionieren, dass die maximal zulässige Einschaltdauer des Leistungsschaltelements S1 über den gesamten Eingangsspannungsbereich nicht überschritten wird. Die maximal zulässige Dauer einer Flussphase wird dabei getrennt für eine maximale und für eine minimale Eingangsspannung eingestellt.

Der infolge einer Überschreitung der Durchbruchspannung der ersten Zenderdiode D3 wirksame erste Zusatzwiderstand R7 führt zu einem steileren Anstieg der Integratorspannung Uint. Resultat ist eine erhöhte Integratorspannung Uint bei steigender Eingangsspannung.

Der zweite Zusatzwiderstand R8 übt einen abschwächenden Effekt auf die Integratorspannung Uint aus. Sobald dieser Zusatzwiderstand R8 bei erreichter Durchbruchspannung der zweiten Zenerdiode D4 wirksam wird, verflacht sich der Anstieg der Integratorspannung Uint.

Spannungsteiler mit beispielsweise mehr als zwei in Serie geschalteten Hauptwiderständen sind ebenfalls zur Annäherung der Spannungsrampe des RC-Integrators an einen linearen Verlauf nutzbar. Auch solche Lösungen sind von der vorliegenden Erfindung umfasst.

## Patentansprüche

1. Durchflusswandler mit einem Transformator, umfassend eine Primärwicklung (WP), welche mittels eines Leistungsschaltelements (S1) an eine Eingangsspannung schaltbar ist, wobei zur Flussphasenbegrenzung ein RC-Integrator (Int) an eine von der Eingangsspannung abhängige Hilfsversorgungsspannung angeschaltet ist, wobei zwischen RC-Integrator (Int) und Hilfsversorgungsspannung ein nichtlinearer Spannungsteiler angeordnet ist, welcher eine nichtlineare Spannungsrampe des RC-Integrators (Int) einem linearen Verlauf annähert, **dadurch gekennzeichnet, dass** der nichtlineare Spannungsteiler zwei in Serie an die Hilfsversorgungsspannung angeschlossene Hauptwiderstände (R5, R6) umfasst und dass parallel zu jedem Hauptwiderstand (R5, R6) eine Serienschaltung aus einem Zusatzwiderstand (R7, R8) und einer Zenerdiode (D3, D4) angeordnet ist.

2. Durchflusswandler nach Anspruch 1, **dadurch gekennzeichnet, dass** die Hilfsversorgungsspannung an einem ersten Kondensator (C1) anliegt, welcher über eine erste Diode (D1) an eine Hilfswicklung (WH) des Transformators angeschlossen ist.

3. Durchflusswandler nach Anspruch 1 oder 2, **dadurch gekennzeichnet, dass** der RC-Integrator (Int) parallel zu einem Hauptwiderstand (R6) angeordnet ist.

4. Durchflusswandler nach Anspruch 3, **dadurch gekennzeichnet, dass** eine Verbindung zwischen dem Integrator-Widerstand (R1) und dem Integrator-Kondensator (C2) des RC-Integrators (Int) einerseits über eine zweite Diode (D2) an eine Resetschaltung (Res) angeschaltet und andererseits mit einer Referenzschaltung verbunden ist.

5. Durchflusswandler nach Anspruch 4, **dadurch gekennzeichnet, dass** die Resetschaltung (Res) einen PWM-Ausgang (PWM) eines Mikrocontrollers (CON) umfasst.

6. Durchflusswandler nach Anspruch 4 oder 5, **dadurch gekennzeichnet, dass** die Referenzschaltung zum Vergleich der am Integrator-Kondensator (C2) anliegenden Integratorspannung (Uint) mit einer Referenzspannung (Uref) ein Hilfsschaltelement (S2) umfasst.

## Claims

1. Forward converter having a transformer, comprising a primary winding (WP), which can be shifted to an input voltage by means of a power switch element (S1), wherein for flux phase limitation an RC integrator (Int) is connected to an auxiliary supply voltage which is dependent on the input voltage, wherein a non-linear voltage divider is arranged between the RC integrator (Int) and the auxiliary supply voltage, which voltage divider converges a non-linear voltage ramp of the RC integrator (Int) to a linear course,
**characterised in that**
the non-linear voltage divider comprises two main resistors (R5, R6) which are connected in series with the auxiliary supply voltage and that a series circuit comprising an additional resistor (R7, R8) and a Zener diode (D3, D4) is arranged parallel to each main resistor (R5, R6).

2. Forward converter according to claim 1, **characterised in that** the auxiliary supply voltage is applied to a first capacitor (C1), which is connected via a first diode (D1) to an auxiliary winding (WH) of the transformer.

3. Forward converter according to claim 1 or 2, **characterised in that** the RC integrator (Int) is arranged parallel to a main resistor (R6).

4. Forward converter according to claim 3, **characterised in that** a connection between the integrator resistor (R1) and the integrator capacitor (C2) of the RC integrator (Int) is connected on one side via a second diode (D2) to a reset circuit (Res) and is connected on the other side to a reference circuit.

5. Forward converter according to claim 4, **characterised in that** the reset circuit (Res) comprises a PWM output (PWM) of a microcontroller (CON).

6. Forward converter according to claim 4 or 5, **characterised in that** to compare the integrator voltage (Uint) applied to the integrator capacitor (C2) with a reference voltage (Uref) the reference circuit comprises an auxiliary circuit element (S2).

## Revendications

1. Convertisseur de débit avec un transformateur, comprenant un enroulement primaire (WP), lequel peut être commuté sur une tension d'entrée au moyen d'un élément de commutation de puissance (S1), dans lequel en vue de la délimitation des phases de flux un intégrateur RC (Int) est connecté à une tension d'alimentation auxiliaire dépendante de la tension d'entrée, dans lequel entre l'intégrateur RC (Int) et la tension d'alimentation auxiliaire est disposé un répartiteur de tension non linéaire, lequel approche une rampe de tension non linéaire de l'intégrateur RC (Int) d'un cours linéaire, **caractérisé en ce que** le répartiteur de tension non linéaire comprend deux résistances principales (R5, R6) raccordées en série à la tension d'alimentation auxiliaire et **en ce que** parallèlement à chaque résistance principale (R5, R6) est disposée un circuit série constitué d'une résistance complémentaire (R7, R8) et d'une diode Zener (D3, D4).

2. Convertisseur de débit selon la revendication 1, **caractérisé en ce que** la tension d'alimentation auxiliaire est appliquée au niveau d'un premier condensateur (C1), lequel est raccordé à un enroulement auxiliaire (WH) du transformateur par l'intermédiaire d'une première diode (D1).

3. Convertisseur de débit selon la revendication 1 ou 2, **caractérisé en ce que** l'intégrateur RC (Int) est disposé parallèlement à une résistance principale (R6).

4. Convertisseur de débit selon la revendication 3, **caractérisé en ce qu'**un raccord entre la résistance d'intégrateur (R1) et le condensateur d'intégrateur (C2) de l'intégrateur RC (Int) est d'une part connecté par l'intermédiaire d'une deuxième diode (D2) à un circuit de remise à l'état initial (Res) et d'autre part raccordé à un circuit de référence.

5. Convertisseur de débit selon la revendication 4, **caractérisé en ce que** le circuit de remise à l'état initial (Res) comprend une sortie PWM (PWM) d'un microcontrôleur (CON).

6. Convertisseur de débit selon la revendication 4 ou 5, **caractérisé en ce que** le circuit de référence comprend en vue de la comparaison de la tension d'intégrateur (Uint) appliquée au niveau du condensateur d'intégrateur (C2) avec une tension de référence (Uref) un élément de commutation auxiliaire (S2).
